(19) **Europäisches Patentamt / European Patent Office / Office européen des brevets**

(11) **EP 3 543 769 B1**

(12) **EUROPEAN PATENT SPECIFICATION**

(45) Date of publication and mention of the grant of the patent:
**09.11.2022 Bulletin 2022/45**

(21) Application number: **19162609.2**

(22) Date of filing: **13.03.2019**

(51) International Patent Classification (IPC):
**G02B 27/01** (2006.01)

(52) Cooperative Patent Classification (CPC):
**G02B 27/0101;** G02B 2027/0112; G02B 2027/0118;
G02B 2027/014

(54) **IMAGE DISPLAY APPARATUS, MOBILE OBJECT, IMAGE DISPLAY METHOD, AND CARRIER MEANS**

BILDANZEIGEVORRICHTUNG, MOBILES OBJEKT, BILDANZEIGEVERFAHREN UND TRÄGERMITTEL

APPAREIL D'AFFICHAGE D'IMAGES, OBJET MOBILE, PROCÉDÉ D'AFFICHAGE D'IMAGES ET MOYENS DE SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2018 JP 2018051814**

(43) Date of publication of application:
**25.09.2019 Bulletin 2019/39**

(73) Proprietor: **Ricoh Company, Ltd.**
**Tokyo 143-8555 (JP)**

(72) Inventors:
• **ICHIKAWA, Yoichi**
**Tokyo, 143-8555 (JP)**

• **SAKAI, Naoki**
**Tokyo, 143-8555 (JP)**
• **KOBASHIGAWA, Shohta**
**Tokyo, 143-8555 (JP)**
• **HIRAGUCHI, Hiroki**
**Tokyo, 143-8555 (JP)**
• **KISHI, Yumiko**
**Tokyo, 143-8555 (JP)**

(74) Representative: **J A Kemp LLP**
**80 Turnmill Street**
**London EC1M 5QU (GB)**

(56) References cited:
EP-A1- 3 206 075          WO-A1-2017/138321
JP-A- 2015 141 155       JP-U- H0 665 055

**Description**

BACKGROUND

Technical Field

Embodiments of the present disclosure relate to an image display device, a mobile object, an image display method, and carrier means for causing a computer to execute the method.

Background Art

In vehicle-mounted HUD (head up display), it is a key point to improve the viewability (visual recognizability) of a display image. In vehicle-mounted HUDs, light for projecting a display image is reflected by a combiner to generate a virtual image, and a driver visually recognizes the generated virtual image. In this configuration, the display image (the generated virtual image) is superimposed on the background such as a road surface so that the background is viewable through the generated virtual image. So, the background of the display image of the HUD significantly changes while the vehicle is travelling. In such a case in which the luminance or color gamut of the background superimposed on the virtual image significantly changes, the visibility of the HUD also significantly changes due to changes in the luminance or color of the background. For such reasons, the viewability significantly deteriorates depending on the conditions of the background.

JP-H06(1994)-211070 discloses the technology to detect a background color or background illuminance outside the glass of the vehicle, determine a display color based on the detected background color or background illuminance, and control colored light emitted from the light source so as to display a virtual image with the determined display color.

WO 2017/138321 A1 discloses using an ambient light sensor or a front facing camera to detect the brightness of external light, and to control the brightness of a display image in dependence on the detected external light.

EP 3 206 075 A1 discloses detecting the chromaticity of external light and controlling the chromaticity of a display image in dependence on the chromaticity of the external light.

Such a technology, however, fails to maintain a high-level visibility of the display image due to failure of adaptation to changes in the background of the display image displayed in a traveling mobile object such as a vehicle.

SUMMARY

The present invention relates to an image display apparatus, an image display method and a computer program comprising computer readable code as described in the claims.

The embodiments of the present disclosure can enable the display device to maintain a high-level visibility of a display image by adapting to changes in the background of the display image while a mobile object such as a heads-up display (HUD) is traveling.

BRIEF DESCRIPTION OF THE DRAWINGS

The aforementioned and other aspects, features, and advantages of the present disclosure will be better understood by reference to the following detailed description when considered in connection with the accompanying drawings, wherein:

FIG. 1 is a front view of an example virtual image displayed in a display area in an on-vehicle HUD according to an embodiment of the present disclosure;
FIG. 2 is a schematic partially-cutaway side view of the configuration of a car on which the on-vehicle HUD according to an embodiment of the present disclosure;
FIG. 3 is a block diagram of an internal configuration of an optical system of the on-vehicle HUD according to an embodiment of the present disclosure;
FIG. 4 is a block diagram of an internal configuration of a control system of the on-vehicle HUD according to an embodiment of the present disclosure;
FIG. 5 is a block diagram of configurations of of the on-vehicle HUD according to an embodiment of the present disclosure and peripheral devices;
FIG. 6 is an illustration of a relation between obtainment of the background color gamut and color transformation of an image;
FIG. 7 is a functional block diagram of a control system to display an image in the on-vehicle HUD device;
FIG. 8 is a flowchart of an image display processing;

FIG. 9 is an illustration of an example color-information obtaining area according to an example of the present disclosure;

FIG. 10 is an illustration of an example color-information obtaining area according to an example of the present disclosure;

FIGs. 11A and 11B are illustrations of another example color-information obtaining area according to another example of the present disclosure;

FIGs. 12A and 12B are illustrations of still another example color-information obtaining area according to another example of the present disclosure;

FIGs. 13A and 13B are chromaticity diagrams for explaining an example color-transformation process according to an example of the present disclosure;

FIGs. 14A, 14B, 14C, and 14D are illustrations of other example color-transformation processes;

FIGs. 15A, 15B, 15C, and 15D are chromaticity diagrams for explaining other example color-transformation processes;

FIGs. 16A and 16B are chromaticity diagrams for explaining the advantageous effects of the color-transformation process;

FIG. 17 is a schematic partially-cutaway side view of the configuration of a car on which an on-vehicle HUD is mounted.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results. As used herein, the singular forms "a", "an", and "the" are intended to include the plural forms as well, unless the context clearly indicates otherwise.

Although the embodiments are described with technical limitations with reference to the attached drawings, such description is not intended to limit the scope of the disclosure and all of the components or elements described in the embodiments of this disclosure are not necessarily indispensable.

Embodiments of the present disclosure are described in detail with reference to the drawings. Like reference numerals designate identical or corresponding components throughout the several views and a description of same is omitted.

The embodiments of an image display device, a mobile object, an image display method, and a recording medium storing program code are described in in detail with reference to the drawings.

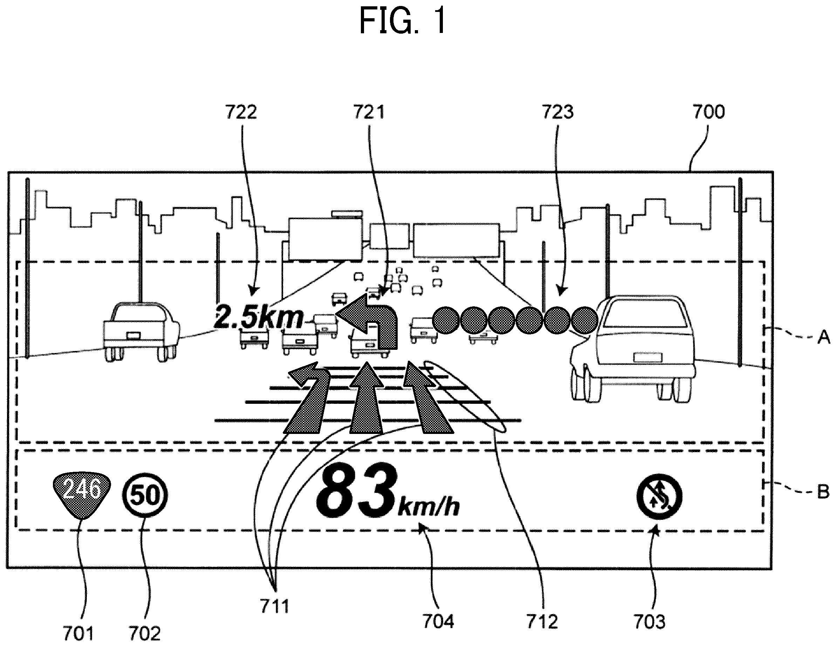

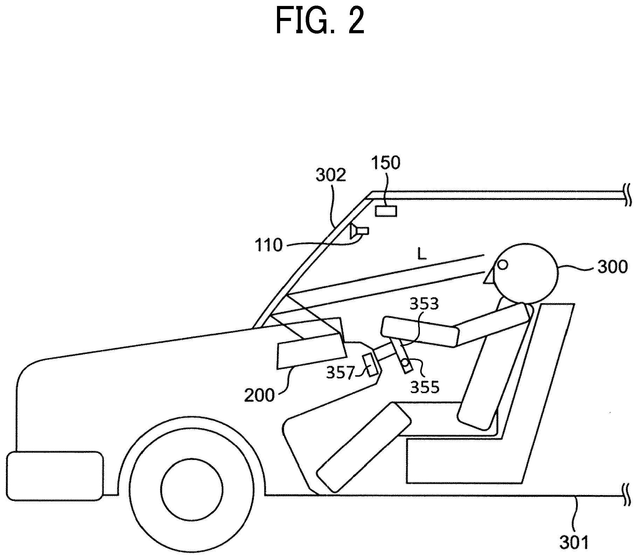

FIG. 1 is a front view of an example virtual image displayed in a display area in an on-vehicle HUD 200 device according to an embodiment of the present disclosure. The virtual image in FIG. 1 is an example virtual image displayed in a display area over the sight ahead of a host vehicle 301 viewed from a driver 300 through a windshield 302. Further, FIG. 2 is a schematic partially-cutaway side view of the configuration of a car on which the on-vehicle HUD according to an embodiment of the present disclosure is mounted.

In FIG. 2, the on-vehicle HUD 200 (an image display apparatus) is installed, for example, in the dashboard of the host vehicle 301 that serves as a mobile object. The projection light L, which is the light for projecting an image, that is emitted from the on-vehicle HUD 200 disposed in the dashboard is reflected by the windshield 302 that serves as a light transmission member, and is directed toward the driver 300. Accordingly, the driver 300 can visually recognize a HUD display image such as a navigation image, which will be described later, as a virtual image G. In some embodiments, a combiner that serves as a light transmission member may be disposed on the inner wall of the windshield 302, and the driver 300 may visually recognizes a virtual image formed by the projection light L that is reflected by the combiner.

A camera 110 and an environmental light sensor 150 are disposed in the upper portion of the windshield 302. The camera 110 is configured to capture an image in front including information (display information) to be displayed by the HUD 200 and its background image through the windshield 302. The environmental light sensor 150 is configured to detect the brightness and the chromaticity of the environmental light at and/or proximate to the display image of the HUD 200. The term "brightness" herein indicates luminance, illuminance, light intensity, total luminous flux, and a value calculated from a result of measuring the degrees of these items.

In the present embodiment, the optical system 230 and other components of the on-vehicle HUD 200 are configured such that the distance from the driver 300 to the virtual image G becomes equal to or longer than 4 meters (m). In the typical on-vehicle HUDs, the distance from the driver 300 to the virtual image G is approximately 2 m. Usually, the driver 300 observes a point at infinity ahead of the vehicle, or observes a preceding vehicle a few tens of meters ahead of the vehicle. When the driver 300 who is focusing on an object in the distance attempts to visually recognize the virtual image G that is 2 m ahead of the vehicle, the crystalline lenses of the eyes need to be moved widely because the focal length greatly varies. In such cases, the time required to adjust the focus of the eyes and focus on the virtual image G becomes longer, and it takes a long time to recognize the detail of the virtual image G. What is worse, the eyes of the driver 300 tend to get tired. Moreover, it is difficult for the driver to realize the detail of the virtual image G, and it is difficult to use the virtual image G to appropriately provide information to the driver.

If the distance to the virtual image G is equal to or longer than 4 m as in the present embodiment, the amount of movement in the crystalline lenses of the eyes is reduced to a less amount of movement than the typical on-vehicle HUDs do, and the time required to adjust the focus of the eyes and focus on the virtual image G becomes shorter. Accordingly, the driver 300 can recognize the detail of the virtual image G at an early stage, and the possible tiredness of the eyes of the driver 300 can be reduced. Moreover, it becomes easier for the driver to realize the detail of the virtual image G, and it is easy to use the virtual image G to appropriately provide information to the driver. When the distance to the virtual image G is equal to or greater than 4 m, the driver can focus on the virtual image G with almost no convergence motion in the eyes. Accordingly, the sense of distance (change in perceptual distance) or the depth perception (difference in perceptual distance), which are expected to be brought by motion parallax, can be perceived as desired in absence of the convergence motion of the eyes. As described above, according to the present embodiment, the driver can perceive the information as intended in view of the sense of distance or depth perception of an image.

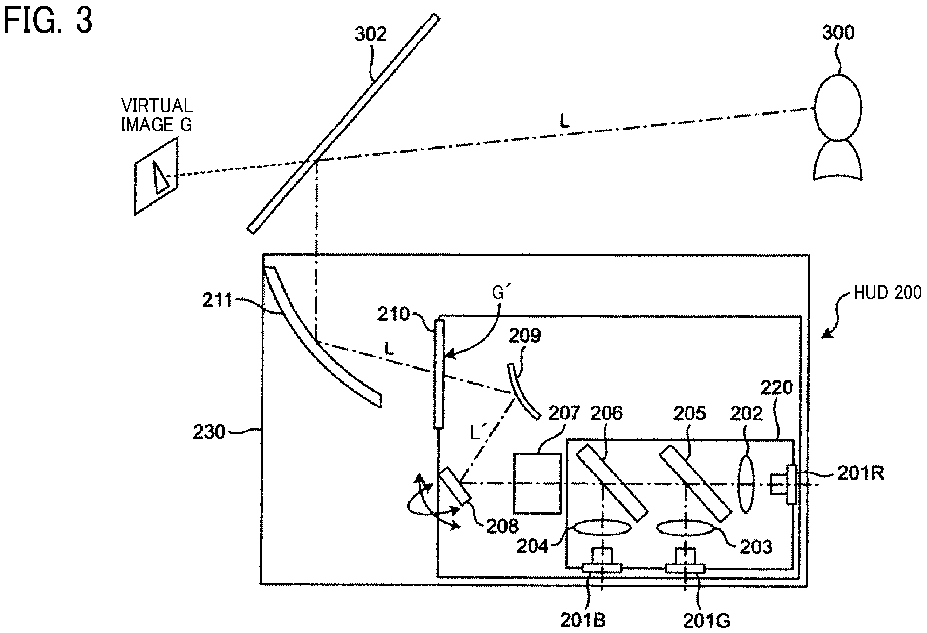

FIG. 3 is a block diagram of an internal configuration of an optical system 230 of the on-vehicle HUD 200 according to an embodiment of the present disclosure. As illustrated in FIG. 3, the on-vehicle HUD 200 includes, in the optical system 230, red, green, and blue laser beam sources 201R, 201G, and 201B, collimator lenses 202, 203, and 204 that are provided for the laser beam sources 201R, 201G, and 201B, respectively, and two dichroic mirrors 205 and 206. The on-vehicle HUD 200 further includes a light quantity adjuster 207, an optical scanner 208, a free-form surface mirror 209, a microlens array 210 as a light dispersing member, and a projector mirror 211 as a reflector. The above-described red, green, and blue laser beam sources 201R, 201G, and 201B, collimator lenses 202, 203, and 204, the dichroic mirrors 205 and 206 are housed in an optical housing, which constitutes a light source unit 220 according to the present embodiment.

Each of the laser beam sources 201R, 201G, and 201B may be an laser diode (LD) (semiconductor laser element). The wavelength of a laser beam that is emitted from the red laser beam source 201R is, for example, 640 nanometer (nm). The wavelength of a laser beam that is emitted from the green laser beam source 201G is, for example, 530 nm. The wavelength of the laser beam that is emitted from the blue laser beam source 201B is, for example, 445 nm.

The on-vehicle HUD 200 according to the present embodiment projects the intermediate image formed on the microlens array 210 onto the windshield 302 of the vehicle 301, so that the driver 300 can visually recognize the magnified intermediate image as a virtual image G. The laser beams of RGB colors emitted from the laser beam sources 201R, 201G, and 201B are approximately collimated by the collimator lenses 202, 203, and 204, and are combined by the two dichroic mirrors 205 and 206. The light quantity of combined laser beam is adjusted by the light quantity adjuster 207, and then the adjusted laser beam is two-dimensionally scanned by the mirror of the optical scanner 208. The scanned light L' that is two-dimensionally scanned by the optical scanner 208 is reflected by the free-form surface mirror 209 so as to correct the distortion, and then is focused onto the microlens array 210. Accordingly, an intermediate image is drawn.

In the present embodiment, the microlens array 210 is used as a light dispersing member that individually disperses and emits the luminous flux of each pixel of the intermediate image (i.e., each point of the intermediate image). However, any other light dispersing member may be used. Alternatively, a liquid crystal display (LCD) or a vacuum fluorescent display (VFD) may be used as a method of forming the intermediate image G'. However, in order to display the virtual image G with a wide dimension and high brightness, the laser scanning system is desired as in the present embodiment.

In the systems where an LCD or VFD is used, a non-image area of the display area on which the virtual image G is displayed is slightly irradiated with light, and it is difficult to completely shut such light to the non-image area. For this reason, in the systems where an LCD or VFD is used, the non-image area disturbs the visual recognizability of the sight ahead of the vehicle 301. By contrast, if a laser scanning system is adopted as in the present embodiment, the light that irradiates the non-image area of the display area on which the virtual image G is displayed can be completely shut by switching off the laser beam sources 201R, 201G, and 201B. For this reason, if a laser scanning system is adopted as in the present embodiment, the non-image area does not disturb the visual recognizability of the sight ahead of the vehicle 301 as the light from the on-vehicle HUD 200 that may irradiate the non-image area can be completely shut.

When the degree of warning is enhanced by gradually increasing the luminance of the warning image that alerts the driver, the display needs to be controlled such that only the luminance of the warning image gradually increases among the various kinds of images displayed in the display area 700. Again, the laser scanning system is suitable for such cases where the display is controlled such that the luminance of a part of the images displayed in the display area 700 is selectively increased. In a system using a liquid crystal display (LCD), a fluorescent display tube (VFD), or the like, luminance also increases for images other than warning images displayed in the display area 700. In such cases, the difference in luminance cannot be increased between the warning image and the other images. Accordingly, the degree of the warning cannot be sufficiently enhanced by gradually increasing the luminance of the warning image.

The optical scanner 208 uses a known actuator driver system such as a micro-electromechanical systems (MEMS) to incline the mirror to the main scanning direction and the sub-scanning direction, and two-dimensionally scans (raster-scans) the laser beams incident on the mirror. The mirror is controlled in synchronization with the timing at which the laser beam sources 201R, 201G, and 201B emit light. The optical scanner 208 may be configured, for example, by a mirror system that includes two mirrors that pivot or rotate around the two axes that are orthogonal to each other.

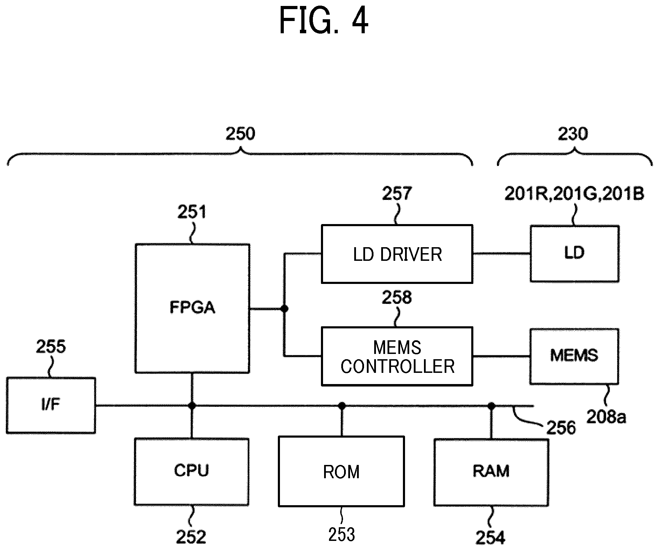

FIG. 4 is a block diagram of the internal configuration of the control system 250 of on-vehicle HUD 200. As illustrated in FIG. 4, the control system 250 of the on-vehicle HUD 200 includes a field programmable gate array (FPGA) 251, a central processing unit (CPU) 252, a read-only memory (ROM) 253, a random access memory (RAM) 254, an interface (I/F) 255, a bus line 256, a laser diode (LD) driver 257, and a micro-electromechanical systems (MEMS) controller 258.

The FPGA 251 uses the LD driver 257 to control the operation of the laser beam sources 201R, 201G, and 201B of the light source unit 220. Moreover, the FPGA251 uses the MEMS controller 258 to control the operation of a MEMS 208a of the optical scanner 208.

The CPU 252 controls each operation of the on-vehicle HUD 200. The ROM 253 stores various kinds of programs such as an image processing program that is executed by the CPU 252 to control the operation of the on-vehicle HUD 200. The RAM 254 is mainly used as a working area in which the CPU 252 executes a program.

As one example mode, A program executed by the on-vehicle HUD 200 may be installed for distribution in any desired computer-readable recording medium such as a compact disc, a read-only memory (CD-ROM), a flexible disk (FD), a compact disc-recordable (CD-R), and a digital versatile disk (DVD) in a file format installable or executable by a computer.

The program executed the on-vehicle HUD 200 according to the embodiments of the present disclosure and their modifications may be provided upon being stored in a computer connected to a network such as the Internet and downloaded through the network. Alternatively, the program executed by the on-vehicle HUD 200 according to the embodiments of the present disclosure may be provided or distributed via a network such as the Internet.

Alternatively, any one of such programs may be previously stored in a non-volatile memory such as a ROM of the HUD 200 according to the present embodiment.

The I/F 255 allows the on-vehicle HUD 200 to communicate with an external controller such as a controller area network (CAN) of the vehicle 301. For example, the interface 255 is connected to a vehicle navigation device 400, and various kinds of sensor device 500 through the CAN of the vehicle 301. Moreover, the I/F 255 is connected to the front camera 110 that captures an image in front including an image to be displayed by the on-vehicle HUD 200 and its background image through the front windshield 302. Further, the I/F 255 is connected to the environmental light sensor 150 that detects the brightness or chromaticity of the environmental light at and/or proximate to the display image.

The control system 250 converts the color of the display image displayed by the HUD 200 by executing the color transformation process on the display image according to the embodiments of the present disclosure.

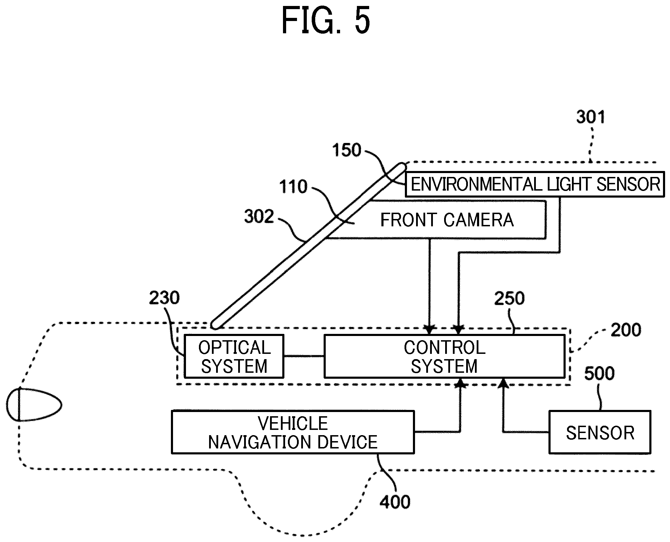

FIG. 5 is a block diagram of configurations of of the on-vehicle HUD 200 and peripheral devices. In the present embodiment, as an information acquisition device that obtains for-driver information to be provided to a driver via a virtual image G, a vehicle navigation device 400 and a sensor 500 are provided. The on-vehicle HUD 200 according to the present embodiment includes the optical system 230 that serves as an image-light projection device (a display unit), and the control system 250 that serves as a display controller.

The vehicle navigation device 400 according to the present embodiment may be any known vehicle navigation device provided for a vehicle or the like. The vehicle navigation device 400 outputs information used for generating a route navigation image to be displayed on a virtual image G, and the information output from the vehicle navigation device 400 is transmitted to the control system 250. The information that is output from the vehicle navigation device 400 includes, for example, as illustrated in FIG. 1, images indicating the number of the lanes (traffic lanes) of the road on which the vehicle 301 is traveling, the distance to the next point where the direction is to be changed (for example, a right turn, left turn, and a branch point), and the direction to which the path is to be changed next in order. As such information is transmitted from the vehicle navigation device 400 to the control system 250, the on-vehicle HUD 200 displays navigation images as follows under the control of the control system 250. In particular, navigation images such as a lane indicator image 711, a following-distance presenting image 712, a path indicator image 721, a remaining distance indicator image 722, an intersection or the like name indicator image 723, are displayed on an upper display area A of the display area 700.

In the example image illustrated in FIG. 1, images indicating road-specific information (e.g., road name, and speed limit) is displayed on a lower display area B of the display area 700. The road-specific information is also input from the vehicle navigation device 400 to the control system 250. The control system 250 uses the on-vehicle HUD 200 to display the road-specific information such as a road-name display image 701, a speed limit display image 702, and a no-passing zone display image 703 on the lower display area B of the display area 700.

The sensor 500 illustrated in FIG. 5 includes one or two or more sensors that detect various kinds of information such as the behavior of the vehicle 301, the state of the vehicle 301, and the environment around the vehicle 301. The sensor device 500 outputs sensing information used for generating an image to be displayed as a virtual image G, and the information output from the sensor 500 is input to the control system 250. For example, in the example image illustrated in FIG. 1, a vehicle speed display image 704 indicating the vehicle speed of the vehicle 301 (i.e., the textual image of "83 km/h" in FIG. 1) is displayed on the lower display area B of the display area 700. The vehicle-speed information included in the CAN information of the vehicle 301 is transmitted from the sensor 500 to the control system 250, and the control system 250 controls the on-vehicle HUD 200 to display the textual image indicating the vehicle speed on the lower display area B of the display area 700.

In addition to the sensor that detects the speed of the vehicle 301, the sensor device 500 includes, for example, a laser radar or imaging device that detects the distance from another vehicle, a pedestrian, or construction such as a guard rail and a utility pole, which exist around (ahead of, on the side of, in the rear of) the vehicle 301, a sensor that detects the external environmental information (e.g., outside air temperature, brightness, and weather) of the vehicle 301, a sensor that detects the driving action (e.g., braking action, and the degree of acceleration) of the driver 300, a sensor that senses the amount of the fuel remaining in the fuel tank of the vehicle 301, and a sensor that senses the state of various kinds of vehicle-borne equipment such as an engine and a battery. As such information is detected by the sensor 500 device and sent to the control system 250, the on-vehicle HUD 200 can display the information as a virtual image G. Accordingly, the information can be provided to the driver 300.

Next, a virtual image G that is displayed by the on-vehicle HUD 200 according to the present embodiment is described. In the present embodiment, for-driver information that the on-vehicle HUD 200 provides for the driver 300 via a virtual image G may be any useful information. In the present embodiment, the for-driver information is broadly divided into passive information and active information.

The passive information is the information to be passively recognized by a driver at the timing when a prescribed information provision condition is met. Accordingly, the passive information includes the information to be provided to the driver 300 at the timing when the on-vehicle HUD 200 is configured, and the passive information includes the information whose provision timing has a certain relation with the detail of the information. The passive information includes, for example, security information for driving, and route navigation information. The security information for driving includes, for example, the following-distance information indicating the distance between the vehicle 301 and the preceding vehicle (i.e., a following-distance presenting image 712 as will be described later), and information including urgent matters for driving (e.g., warning information such as an instruction for urgent action to be taken by a driver, or attention attracting information). The route navigation information indicates a route to a prescribed destination, and such a route is provided to a driver by any known vehicle navigation device. The route navigation information includes, for example, lane information (i.e., the lane indicator image 711) indicating a lane to be taken at an upcoming intersection, and direction-change instruction information indicating a direction change to be made at the next intersection or branch point where the direction is to be changed from the straight-ahead direction. The direction-change instruction information includes, for example, path indicating information (i.e., the path indicator image 721) that indicates the path to be taken at the next intersection or branch point, remaining distance information (i.e., the remaining distance indicator image 722) indicating the distance to the intersection or branch point where the direction change is to be made, and name information of the intersection or branch point (i.e., the intersection or the like name indicator image 723).

The active information is the information to be actively recognized by a driver at the timing specified by the driver himself or herself. The active information is to be provided to the driver 300 only when he or she wishes. For example, the active information includes information where the timing of its provision has low or no relevance to the detail of the information. As the active information is obtained by the driver 300 at the timing when he or she wishes, the active information is usually displayed for a long time or displayed continuously. For example, the road-specific information of the road on which the vehicle 301 is traveling, the vehicle-speed information (i.e., the vehicle speed display image 704) of the vehicle 301, the current-time information are included in the active information. The road-specific information includes, for example, the road-name information (i.e., the road-name display image 701), the regulation information of the road such as speed limit (i.e., the speed limit display image 702 and the no-passing zone display image 703), and other kinds of information of the road useful for the driver 300.

In the present embodiment, the for-driver information, which is broadly divided into the active information and the passive information as described above, is displayed in a corresponding area of the display area 700 where a virtual image G is displayable. More specifically, in the present embodiment, the display area 700 is divided into three display areas in the up-and-down directions. Then, a passive-information image that corresponds to the passive information is mainly displayed in the upper display area A of the obtained three display areas, and an active-information image that corresponds to the active information is mainly displayed in the lower display area B. When a part of the active information is displayed in the upper display area A, the active-information image is displayed in such a manner that a higher priority is given to the visibility of the passive-information image displayed in the upper display area A.

In the present embodiment, a stereoscopic image is used as the virtual image G that is displayed in the display area 700. More specifically, perspective images are used as the lane indicator image 711 and the following-distance presenting image 712 that are displayed in the upper display area A of the display area 700.

More specifically, a perspective image that is drawn by the perspective drawing method such that the length of the five horizontal lines of the following-distance presenting image 712 becomes shorter towards the upper side and the following-distance presenting image 712 heads for a single vanishing point. In particular, in the present embodiment, the following-distance presenting image 712 is displayed such that the vanishing point approximately matches the observation point of the driver 300. Due to this configuration, while the driver 300 is driving, he or she can easily perceive the depth of the following-distance presenting image 712. Moreover, in the present embodiment, a perspective image in which the thickness of the horizontal lines becomes thinner towards the upper side and the brightness of the horizontal lines becomes lower towards the upper side is used. Due to this configuration, while the driver 300 is driving, he or she can even more easily perceive the depth of the following-distance presenting image 712.

Next, the characteristic functions of the on-vehicle HUD 200, which is implemented by executing program stored in the on-vehicle HUD 200 by the control system 250, is described.

In the known technologies, the two-dimensional distribution data of the background region of the display image of the HUD is used to obtain the information of the color-gamut coordinate area of the background light. In such cases, as the time lag between the acquisition of the background color gamut and the color transformation in the image is not considered, the known technologies have difficulties in adapting to changes in the background light due to changes in the speed and the traveling direction of the running vehicle. Further, the demand for a high performance of the device used to obtain the background information and transform colors of the display image increases. Further, the real-time display color transformation for the background that the driver is viewing deteriorates.

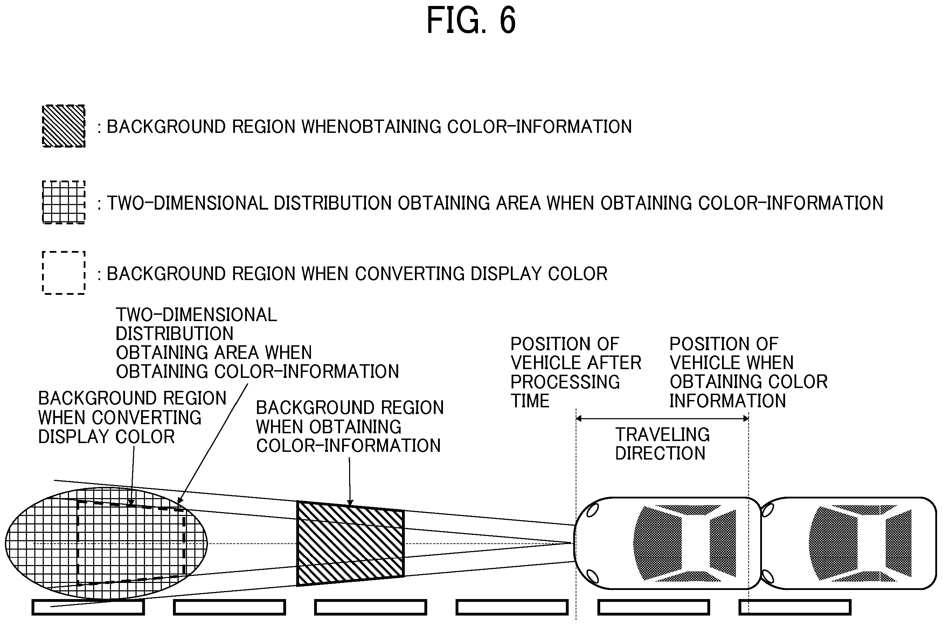

FIG. 6 is an illustration of a relation between acquisition of the background color gamut and color transformation of an image. As illustrated in FIG. 6, the on-vehicle HUD device 200 according to the present embodiments obtains two-dimensional distribution data of any position in the non-background region outside the background of the display image with a temporal change in the background of the display image due to the movement of the traveling vehicle, so as to obtain information of the color-gamut coordinate area of the non-background light. This configuration eliminates a gap between the actual background color gamut visually recognized by the driver at the time of color transformation and the background color gamut used for color transformation. Accordingly, a sufficient visibility of the display image can be achieved without any influence of significant changes in the background of the traveling vehicle even if there is a time lag between the detection of the two-dimensional distribution data and the color transformation of the display image. In addition, as the delay caused by the device is canceled out, an inexpensive device used to, for example, detect two-dimensional distribution data, generate chromaticity coordinate ranges, and transform colors, can be used in the on-vehicle HUD 200.

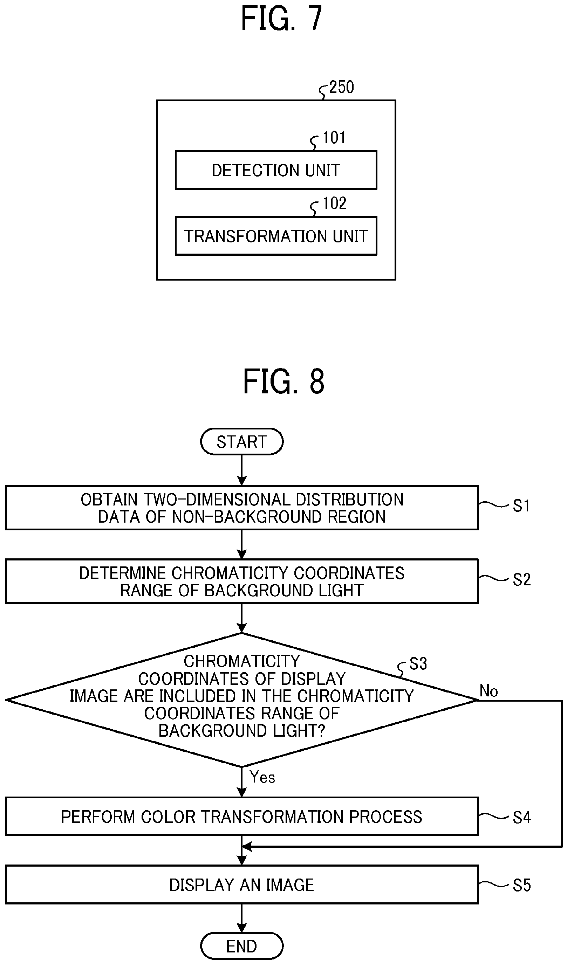

FIG. 7 is a functional block diagram of the control system 250 to display an image in the on-vehicle HUD device 200. FIG. 8 is a flowchart of an image display processing.

As illustrated in FIG. 7, the control system 250 of the on-vehicle HUD 200 includes a detection unit 101 and a transformation unit 102 as functional units to display images.

The detection unit 101 detects information regarding at least one of the color and the brightness of the non-background region that is not superimposed on the display image. More specifically, the detection unit 101 detects two-dimensional distribution data of the non-background region. The term "brightness" herein indicates luminance, illuminance, light intensity, total luminous flux, and a value calculated from the measurement results of the degrees of these items.

The transformation unit 102 transforms the display of the display image based on the information regarding at least one of the color and the brightness of the non-background region detected by the detection unit 101. More specifically, the transformation unit 102 determines a chromaticity coordinate range in the non-background region based on the detected two-dimensional distribution data, and when the chromaticity of the display image is included in the chromaticity coordinate range, the transformation unit 102 transforms the chromaticity (first chromaticity) of the display image to the chromaticity (second chromaticity) of a range outside the chromaticity coordinate range.

As illustrated in FIG. 8, the detection unit 101 detects two-dimensional distribution data of the non-background region (step S1).

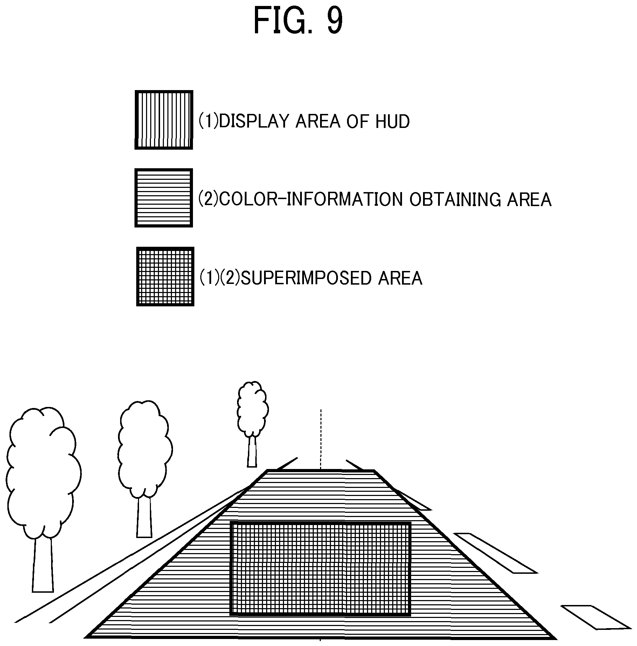

FIG. 9 is an illustration of an example color-information obtaining area according to an embodiment of the present disclosure. As can be seen from FIG. 6, in the non-background region, the background region visually recognized by the driver when (at the time of) transforming the display color varies with the movement of the vehicle. The obtaining area may be changed with the movement of the vehicle. In such a case, a drive system, such as an actuator, is disposed on a detector such as the sensor 500 side. For such a reason, as illustrated in FIG. 9, the detection field of the two-dimensional distribution data and the chromaticity coordinate range to be created are sufficiently wide. That is, the transformation unit 102 detects the two-dimensional distribution data of the filed that covers both the non-background region and the background region.

In step S2, the transformation unit 102 determines a chromaticity coordinate range of the background light.

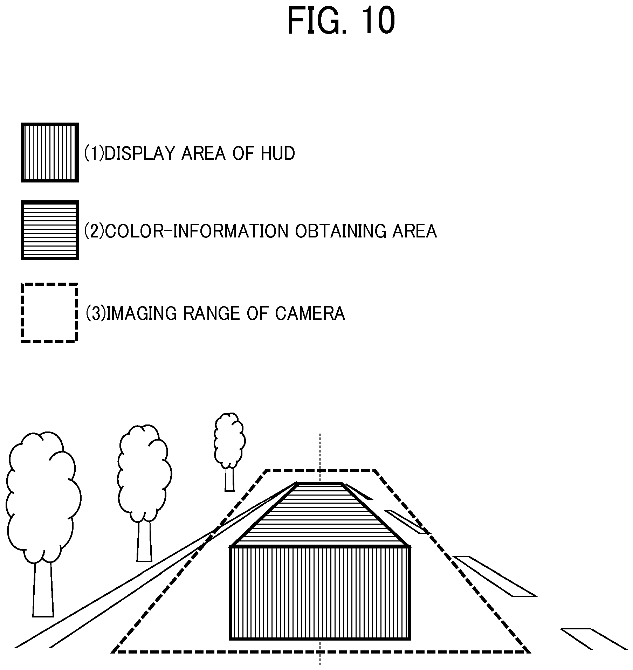

Further, FIG. 10 is an illustration of another example color-information obtaining area according to an example of the present disclosure. As illustrated in FIG. 10, the chromaticity coordinate range to be used for the color transformation is created by using color information of any desired area of the detected two-dimensional distribution range. In some cases, the field (detection field) of the two-dimensional distribution data to be detected includes an area that is not superimposed on the display image at any timing at which the detecting device detects the two-dimensional distribution data, depending on the performance of the detecting device. In such cases, any desired area is selected from the detection field to create a chromaticity coordinate range so that the display color can be prevented from being excessively limited. Further, as the amount of information exchanged between the devices can be reduced, the capacity of each device can be reduced, which leads to a reduction in the cost of the device. In order to narrow the detection field, gain may be applied outside the detection field in detecting the two-dimensional distribution data. Alternatively, data outside the detection field may be excluded from data used for the color transformation to create a chromatic coordinate range. That is, the method of narrowing the detection field is not limited.

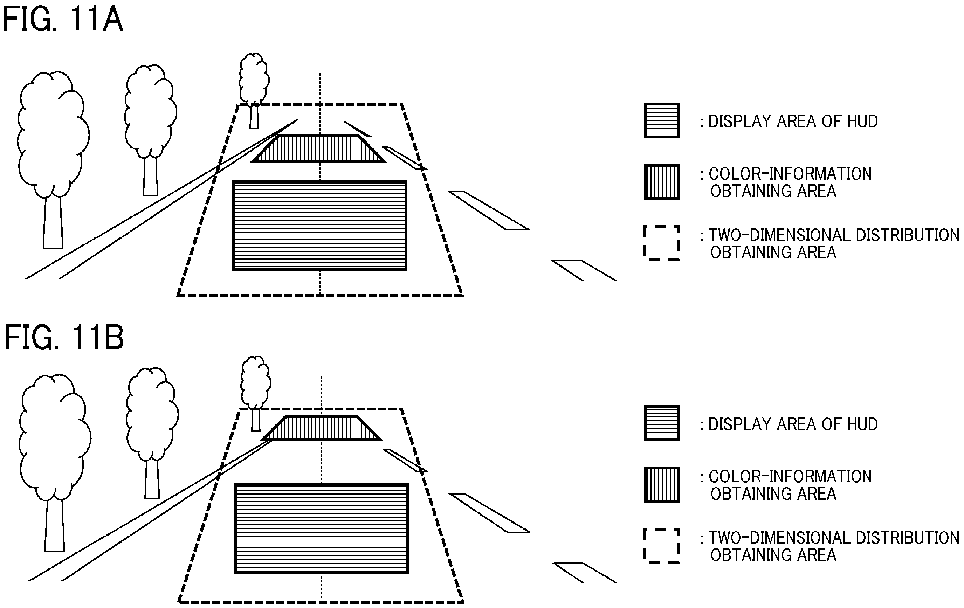

FIGs. 11A and 11B are illustrations of still another example color-information obtaining area according to an example of the present disclosure. As illustrated in FIGs. 11A and 11B, the background area at the timing of transforming the display color varies with the speed of the vehicle and the delay time between the detection of the two-dimensional distribution data and the color transformation. Accordingly, the color-information obtaining area may be narrowed down from the detection field of the two-dimensional distribution data, according to the speed and performance of the device. This configuration may achieve a reduction in the cost of the device. FIG. 11A is an illustration of the case in which the vehicle is running at low speed. FIG. 11B is an illustration of the case in which the vehicle is running at high speed. It can be found from FIGs. 11A and 11B that the color-information obtaining area is farther from the display area of the HUD in the case of high speed (FIG. 11B).

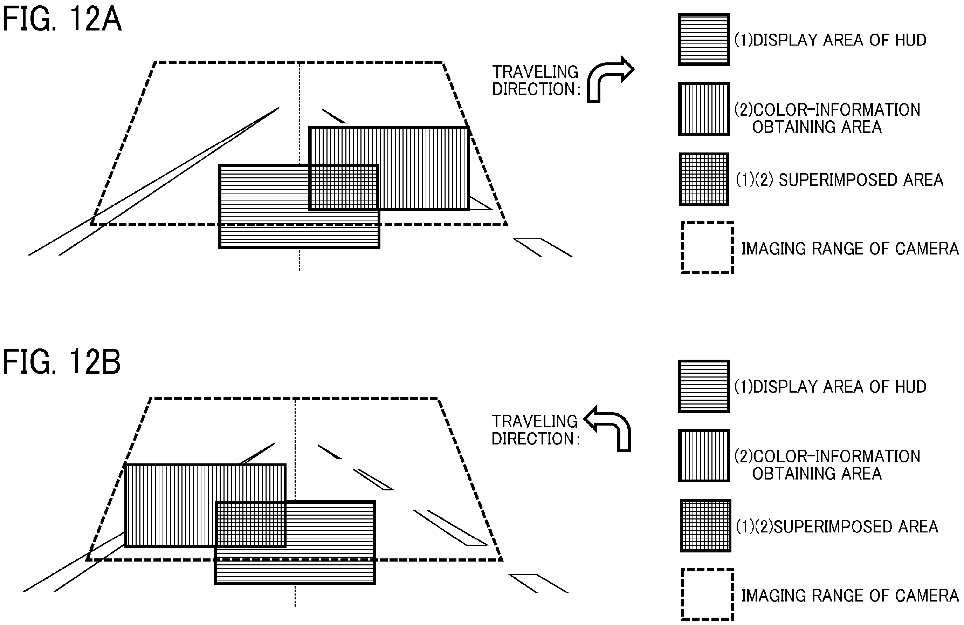

FIG. 12 is an illustration of another example of the color-information obtaining area according to an example of the present disclosure. As illustrated in FIGs. 12A and 12B, when the traveling direction of the vehicle is changed, the on-vehicle HUD 200 obtains information regarding steering or gear, for example, information regarding the traveling direction of the vehicle, and changes the obtaining area of the chromaticity coordinate range based on the obtained information. FIG. 12A is an illustration of the case in which the vehicle turns to the right. FIG. 12B is an illustration of the case in which the vehicle turns to the left. In both cases, it is found that the color-information obtaining area is shifted to the traveling direction. This configuration can provide visibility robustness irrespective of a significant change in the background due to the direction change of the vehicle.

Next, the transformation unit 102 determines whether the chromaticity coordinates of the display image are included in the chromaticity coordinate range of the background light (step S3). When the transformation unit 102 determines that the chromaticity coordinates of the display image are not included in the chromaticity coordinate range of the background light (No in step S3), the process proceeds to step S5 and the on-vehicle HUD 200 displays a display image as is.

When determining that the chromaticity coordinates of the display image are included in the chromaticity coordinate range of the background light (Yes in step S3), the transformation unit 102 executes a color transformation process (step S4) and displays an image on which the color transformation process has been executed (step S5).

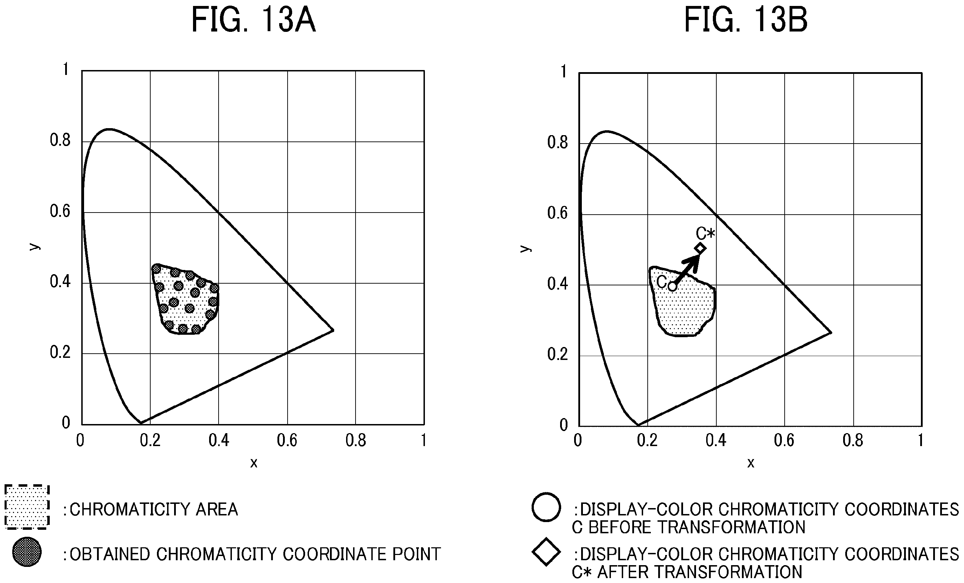

FIGs. 13A and 13B are chromaticity diagrams for explaining an example color-transformation process. In the present disclosure, lower-case letters "xy" indicate chromaticity coordinates, and upper-case letters "XYZ" indicate the levels of tristimulus values. As illustrated in the chromaticity diagram of FIG. 13A, chromatic coordinate points are extracted from any pixel area of the two-dimensional distribution data of each detection field, and a chromaticity coordinate range that includes the extracted chromatic coordinate points is determined to be the chromaticity coordinate range of the background light to be used for the color transformation. In FIG. 13A, the convex hull is used to create the chromaticity coordinate range that includes the extracted chromaticity coordinate points. However, no limitation is intended therein and any other method may be used.

In this case, each chromatic coordinate point is a red, green, and blue (RGB) value for any pixel unit of the two-dimensional distribution image of the non-background region captured by the detection unit 110. Any pixel unit may be one pixel or a plurality of pixels. When any pixel unit consists of one pixel, the RGB value is an output pixel as is. When any pixel unit consists of a plurality of pixels, the RGB value is obtained by summing up all the pixel values included in any pixel area and dividing the sum by the number n of pixels included in any pixel area to obtain the average values Rave, Gave, and Bave of each RGB value.

$$\text{Rave} = \Sigma R/n \quad \text{Gave} = \Sigma G/n \quad \text{Bave} = \Sigma B/n \; ... \; (1)$$

When any chromatic coordinate point in the obtained two-dimensional distribution data is expressed as (xa, ya), the values xa and ya are obtained by transforming obtained RGB values into the chromaticity coordinates, using the following formulas (2) and (3).

$$xw=Xw/(Xw+Yw+Zw) \quad yw=Yc/(Xw+Yw+Zw) \quad ... (2)$$

$Xw=0.4124Rave+0.3576Gave+0.1805Bave$ $\qquad$ $Yw=0.2126Rave+0.7152Gave+0.0722Bave$

$Zw=0.0193Rave+0.1192Gave+0.9505Bave$ ... (3) In formula (3), the RGB value of the obtained image is expressed according to the sRGB standard as an example. However, when a display image is expressed according to another standard of color space, the color transformation process suitable for that standard of color space is performed to obtain the values (xa, ya).

In the color transformation, as illustrated in FIG. 13B, when the chromaticity coordinates C (before the color transformation) of the display color is included in the chromaticity coordinate range to be used for the color transformation, the display color is changed such that the chromaticity coordinates C is transformed into a chromaticity coordinate C* outside the chromaticity coordinate range to be used for the color transformation.

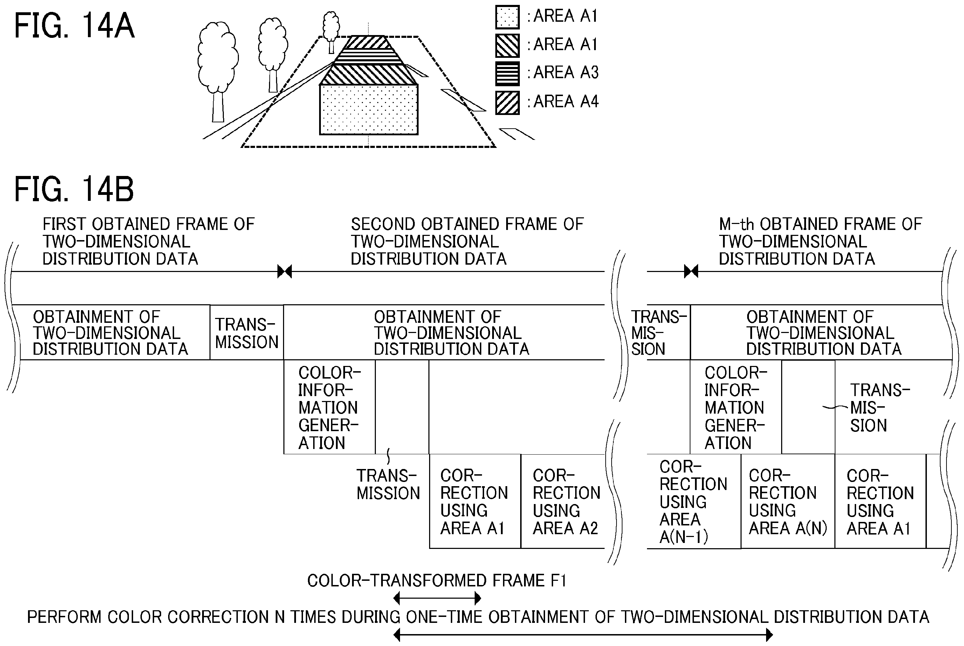

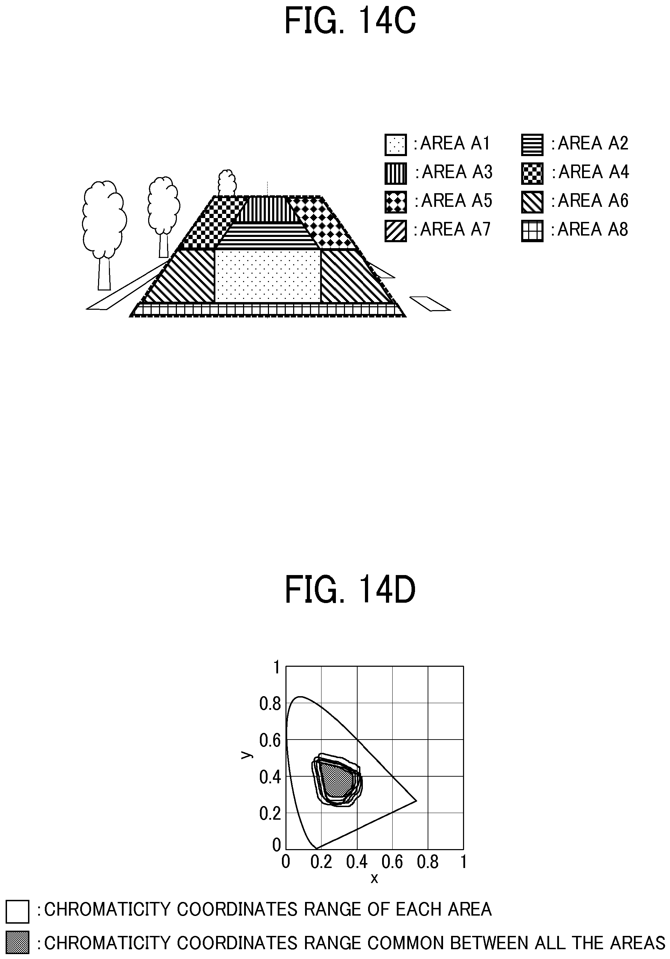

FIGs. 14A, 14B, 14C, and 14D are illustrations for explaining other example color-transformation processes. To transform the display color, a chromatic coordinate range that is wider than the display area may be extracted from the two distribution data to be used as the background chromaticity coordinate range (the chromaticity coordinate range of the background light). As illustrated in FIG. 14A, it is also conceivable to divide the two-dimensional distribution data detected in a wide range into a plurality of areas to obtain the chromaticity coordinate range of each area. As illustrated in FIG. 14B, the chromaticity coordinate range of the background light is selected from the divided plurality of areas in accordance with, for example, the speed and the timing at which the color transformation is performed so that a plurality of background chromaticity coordinate ranges (chromaticity coordinate ranges of the background light) for a plurality of frames, respectively, to be used for the color transformation can be obtained by one-time detection of the two-dimensional distribution data. Accordingly, the frame rate for detecting the two-dimensional distribution data can be reduced.

Further, as illustrated in FIG. 14C, a chromaticity coordinate range of the background light to be used for the color transformation is selected from the obtained background chromaticity coordinate ranges of the divided areas, according to information regarding the traveling direction of the vehicle such as the information regarding a steering wheel. With this configuration, the visibility of the display image can be maintained constant irrespective of a significant change in the background due to the direction change.

Further, as illustrated in FIG. 14D, according to an embodiment, the chromaticity coordinate range of the background light to be used for the color transformation is common between all or a part of the divided areas. With this configuration, the chromaticity coordinate range of the background light can be stably obtained while reducing or eliminating the variation and noise associated with the obtaining process, and the frame rate for the color transformation can be reduced.

The case in which the detection field is divided into areas illustrated in FIGs. 14A, 14B, and 14Cis merely an example, and no limitation is intended therein.

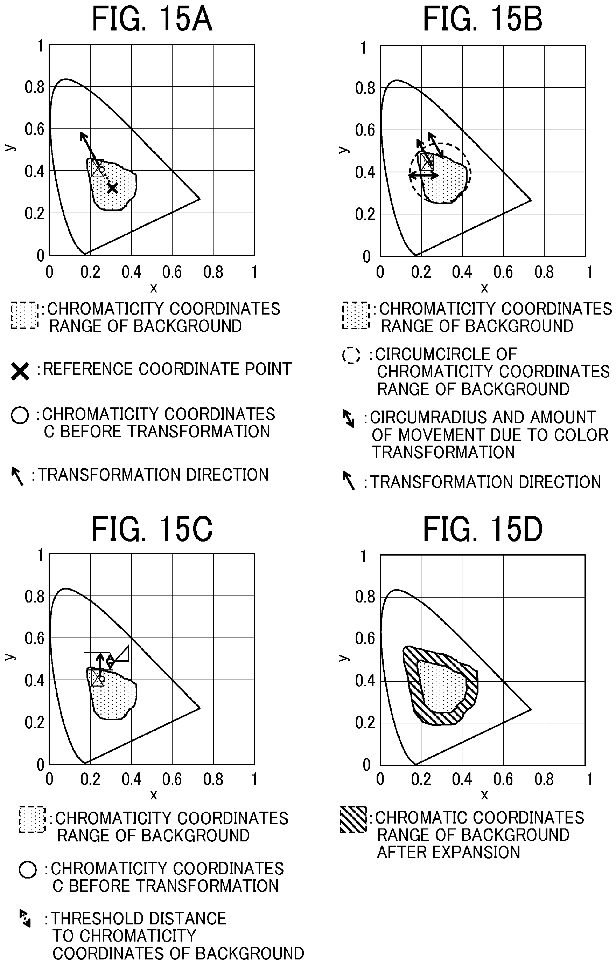

FIGs. 15A, 15B, 15C, and 15D are chromaticity diagrams for explaining other example color-transformation processes. As illustrated in FIG. 15A, the direction of the color transformation is a direction of a vector in which the chromaticity coordinates are shifted to transform the display color. Such a vector is determined by the reference coordinate point of, for example, the white color, and the coordinate point of the display color before the color transformation. Note that in such a case, the direction of the vector in which the display color before the color transformation is transformed (shifted) is not the same as the direction of the vector in which colors indicating danger or warning is transformed (shifted). Similarly, it is also conceivable to preliminarily set a color direction that is advantageous for the driver's recognition based on the visual characteristics of the driver and transform the display color in the preset direction.

As illustrated in FIG. 15B for explaining the amount of movement of the vector in transforming the display color, the amount of movement is determined by the radius of the circumscribed circle of the chromaticity coordinate range to be used for the color transformation. Alternatively, as illustrated in FIG. 15C, the display color is transformed such that the shifted chromaticity coordinates (after the color transformation) are away from the chromaticity coordinate range by a given amount (threshold distance) $\Delta$ or more. In these cases, as illustrated in FIG. 15D, an additional process is performed to expand the chromaticity coordinate range of the background light to be used for the color transformation in advance, instead of adding the amount $\Delta$ to the amount of transformation. In FIG. 15D, the amount $\Delta$ is fixed in all directions, but it is also conceivable to vary the amount $\Delta$ with the outer circumferential direction and the distortion of the color space.

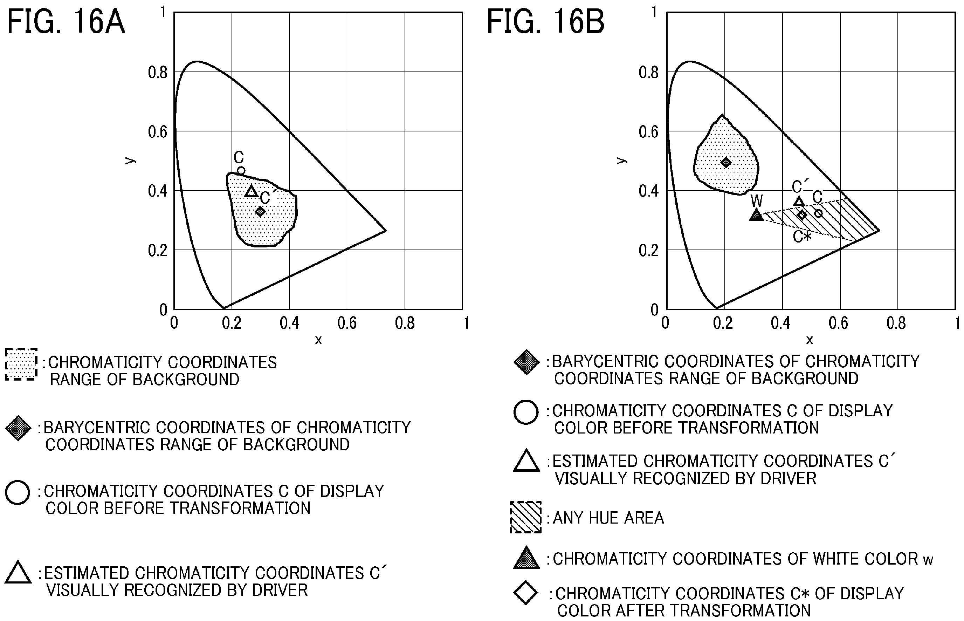

FIGs. 16A and 16B are chromaticity diagrams for explaining the advantageous effects of the color-transformation process. In the typical on-vehicle HUDs, the background is also visually recognized through the display image when the driver views the display image. Accordingly, as illustrated in FIG. 16A, the chromaticity coordinates of the display color visually recognized by the driver is shifted from the set value C to another value C' that is an estimated chromaticity coordinates visually recognized by the driver, due to the influence of the background light superimposed on the display image. With such a shift, the display color differs between before and after the color transformation, which might lead to a failure in the visual recognition of the display image after the color transformation.

By contrast, in the on-vehicle HUD 200 according to the present embodiment of the present disclosure, it is possible that the chromaticity of the coordinate point C' of the display color (after the color transformation) actually recognized by the driver is the same as the chromaticity of the display color before the color transformation. Thus, the on-vehicle HUD 200 according to the present embodiment of this disclosure enables more accurate estimation of the chromaticity of the display color after the color transformation.

The chromaticity at the chromaticity coordinate point C' of the display color (after the color transformation) actually recognized by the driver may be estimated from the actual measurement of the display color including the background light such as light reflected from the road surface when the vehicle is traveling. Alternatively, the chromaticity at the chromaticity coordinate point C' of the display color (after the color transformation) may be estimated from the the background chromaticity coordinate range obtained for the color transformation and the set chromaticity of the display color. The set chromatic coordinate point C of the display color (before the color transformation) to be used for the estimation may be a value actually measured in advance, or may be calculated based on the LD characteristics and the information (physical quantity) regarding the operating environment.

In FIG. 16A, the chromatic coordinate point (chromaticity coordinates) C' is in the middle of the barycentric coordinates of the background chromaticity coordinate range and the chromatic coordinate point C of the display color. As illustrated in FIG. 16B, the distance between the barycentric coordinates of the background chromaticity coordinate range and the chromatic coordinate point C' and the distance between the chromatic coordinate point C of the set display color and the chromatic coordinate point C' may be variable according to the information regarding the ratio in luminance between the background light and the display image.

In the detail of the display image in which the hue of the display color has meanings, such as the design of attention or danger, even if the chromaticity coordinates of the display color are not included in the chromaticity coordinate range of the background light, the hue might change when the background light is superimposed on the display image. In such cases, the color transformation is to be performed. In this case, any desired area is designated in the chromaticity coordinates depending on the detail of the display image, and when the chromatic coordinates of the display color visually recognized by the driver is out of the area, the color transformation is performed.

In the embodiments of the present disclosure, the color information used for the display transformation is obtained after selecting any non-background region. This configuration enables the display device, such as a HUD, to maintain a high-level visibility of the display image irrespective of the capability of a device used to obtain the background information and transform color, and also the running state of the vehicle.

In the present embodiment, the cases in which the on-vehicle HUD 200 is applied as an image display apparatus are described. However, no limitation is intended therein. Alternatively, the on-vehicle HUD 200 may be applied to vehicles, HUD devices, or image display apparatuses such as display devices for other various kinds of purposes.

Such a display image that is to be color-transformed and corrected may be limited to displays of warning or danger that warn a driver that, for example, his/her vehicle is approaching a vehicle ahead too close. The vehicle speed that is displayed all the time or the content that is displayed in white may not be subjected to the color transformation.

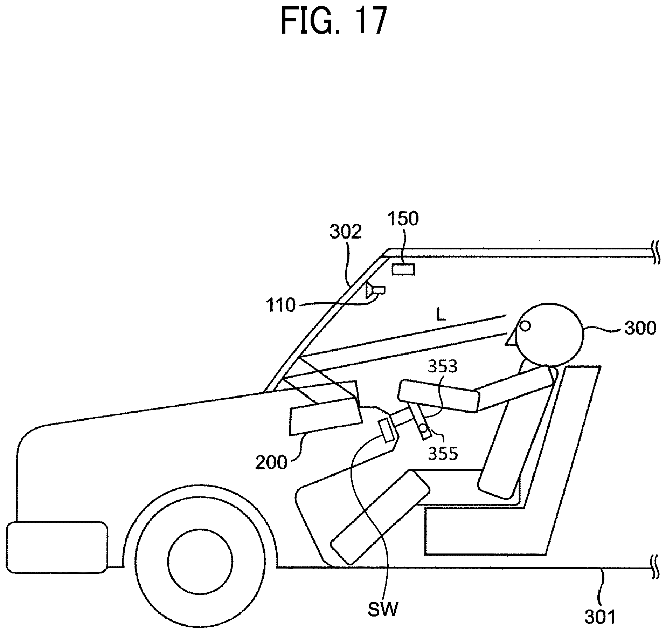

Further, in the present embodiment, the cases in which the color transformation is performed at a constant frame rate the color conversion is performed at a constant frame rate. However, for example, considering the influence of the color change due to sunlight, the color transformation may be or may not be performed at a fixed time. Alternatively, the color transformation may be or may not be performed according to the judgement of the driver. When the color transformation is performed according th the judgement of the driver, as illustrated in FIG. 17, a switch SW is tuned on/off to correct the color.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a TCP/IP signal carrying computer code over an IP network, such as the Internet. The carrier medium can also include a storage medium for storing processor readable code such as a floppy disk, hard disk, CD ROM, magnetic tape device or solid state memory device.

Although the embodiments of the present disclosure have been described above, the present disclosure is not limited to the embodiments described above, but a variety of modifications can naturally be made within the scope of the present disclosure. Numerous additional modifications and variations are possible in light of the above teachings. It is therefore to be understood that within the scope of the appended claims, the embodiments may be practiced otherwise than as specifically described herein. For example, elements and/or features of different illustrative embodiments may

**EP 3 543 769 B1**

be combined with each other and/or substituted for each other within the scope of this disclosure and appended claims.

**Claims**

1. A head up display device (200) comprising:

a display unit (230) configured to display a display image;
a detection unit (101) configured to detect two-dimensional pixel distribution data regarding chromaticity and brightness of a non-background region outside a region that is superimposed on the display image; and
a transformation unit (102) configured to:

determine a chromaticity coordinate range of the non-background region based on the detected two-dimensional distribution data, and
transform a first chromaticity of the display image into a second chromaticity outside the determined chromaticity coordinate range when the first chromaticity of the display image is within the determined chromaticity coordinate range;
wherein the transformation unit (102) is configured to:

divide the detected range of the two-dimensional distribution data in to a plurality of areas;
determine chromaticity coordinate ranges of the plurality of areas;
select a chromaticity coordinate range common between the plurality of areas from among the determined chromaticity coordinate ranges; and
transform the first chromaticity to the second chromaticity based on the selected chromaticity coordinate range common between the plurality of areas.

2. The head up display device (200) according to claim 1,
wherein the detection unit (101) is configured to detect two-dimensional distribution data of a region including the non-background region and a background region that is superimposed on the display image.

3. The head up display device (200) according to claim 2,
wherein the first chromaticity of the display image before transformation is a chromaticity of the display image and background light superimposed on the display image.

4. The head up display device (200) according to claim 3,
wherein the first chromaticity of the display image is determined based on information regarding brightness and the chromaticity of the display image and the background light.

5. The head up display device (200) according to claim 1,
wherein the transformation unit (102) is configured to transform the first chromaticity of the display image into the second chromaticity outside the determined chromaticity coordinate range when a chromaticity coordinate point of the display image, which is within the determined chromaticity coordinate range, are outside any designated area of chromaticity coordinates.

6. The head up display device according to any of claims 1 to 5,
wherein in transforming the display content of the display image, the transformation unit (102) is configured to set or selectively change a target area subjected to transformation of the display content of the display image within a display area and a timing of performing the transformation of the display content.

7. A mobile object (301) comprising the head up display device (200) according to any one of claim 1 to 6, to display the display image on a windshield or a combiner mounted on the mobile object (301).

8. An image display method comprising:

detecting two-dimensional pixel distribution data regarding chromaticity and brightness of a non-background region outside a region that a display image displayed by an image display apparatus (200) is superimposed on (S1); and
transforming a display content of the display image based on the detected information by:

determining a chromaticity coordinate range of the non-background region based on the detected two-dimensional distribution data (S2),
dividing the detected range of the two-dimensional distribution data in to a plurality of areas;
determining chromaticity coordinate ranges of the plurality of areas;
selecting a chromaticity coordinate range common between the plurality of areas from among the determined chromaticity coordinate ranges;
transforming a first chromaticity of the display image into a second chromaticity outside the determined chromaticity coordinate range when the first chromaticity of the display image is within the determined chromaticity coordinate range (S3, S4, and S5), and based on the selected chromaticity coordinate range common between the plurality of areas.

9. A computer program comprising computer readable code that when executed by a computer system of a device according to claim 1,
instructs the computer system to:

receive, from a detection unit (101), two-dimensional pixel distribution data regarding chromaticity and brightness of a non-background region outside a region that a display image displayed by an image display apparatus (200) is superimposed on (S1), and
transform a display content of the display image based on the detected information by:

determining a chromaticity coordinate range of the non-background region based on the detected two-dimensional distribution data (S2),
dividing the detected range of the two-dimensional distribution data in to a plurality of areas;
determining chromaticity coordinate ranges of the plurality of areas;
selecting a chromaticity coordinate range common between the plurality of areas from among the determined chromaticity coordinate ranges; and
transforming a first chromaticity of the display image into a second chromaticity outside the determined chromaticity coordinate range when the first chromaticity of the display image is within the determined chromaticity coordinate range (S3, S4, and S5), and based on the selected chromaticity coordinate range common between the plurality of areas.

**Patentansprüche**

1. Head-up-Display-Vorrichtung (200), umfassend:

eine Anzeigeeinheit (230), die dazu konfiguriert ist, ein Anzeigebild anzuzeigen;
eine Erkennungseinheit (101), die dazu konfiguriert ist, zweidimensionale Pixelverteilungsdaten bezüglich der Farbart und Helligkeit einer Nicht-Hintergrundregion außerhalb einer Region zu erkennen, die auf das Anzeigebild überlagert ist; und
eine Umwandlungseinheit (102), die konfiguriert ist, zum:

Bestimmen eines Farbartkoordinatenbereichs der Nicht-Hintergrundregion auf Grundlage der erkannten zweidimensionalen Verteilungsdaten, und
Umwandeln einer ersten Farbart des Anzeigebilds in eine zweite Farbart außerhalb des bestimmten Farbartkoordinatenbereichs, wenn die erste Farbart des Anzeigebilds innerhalb des bestimmten Farbartkoordinatenbereichs liegt;
wobei die Umwandlungseinheit (102) konfiguriert ist, zum:

Teilen des erkannten Bereichs der zweidimensionalen Verteilungsdaten in eine Mehrzahl von Flächen;
Bestimmen der Farbartkoordinatenbereiche der Mehrzahl von Flächen;
Auswählen eines Farbartkoordinatenbereichs, der zwischen der Mehrzahl von Flächen von unter den bestimmten Farbartkoordinatenbereichen normal ist; und
Umwandeln der ersten Farbart in die zweite Farbart auf Grundlage des ausgewählten Farbartkoordinatenbereichs, der zwischen der Mehrzahl von Flächen normal ist.

2. Head-up-Display-Vorrichtung (200) nach Anspruch 1,
wobei die Erkennungseinheit (101) dazu konfiguriert ist, zweidimensionale Verteilungsdaten einer Region, einschließlich der Nicht-Hintergrundregion und einer Hintergrundregion, die auf das Anzeigebild überlagert wird, zu erkennen.

3. Head-up-Display-Vorrichtung (200) nach Anspruch 2,
   wobei die erste Farbart des Anzeigebilds vor der Umwandlung eine Farbart des Anzeigebilds und des Hintergrundlichts ist, das auf das Anzeigebild überlagert wird.

4. Head-up-Display-Vorrichtung (200) nach Anspruch 3,
   wobei die erste Farbart des Anzeigebilds auf Grundlage von Informationen bezüglich der Helligkeit und der Farbart des Anzeigebilds und des Hintergrundlichts bestimmt wird.

5. Head-up-Display-Vorrichtung (200) nach Anspruch 1,
   wobei die Umwandlungseinheit (102) dazu konfiguriert ist, die erste Farbart des Anzeigebilds in die zweite Farbart außerhalb des bestimmten Farbartkoordinatenbereichs umzuwandeln, wenn ein Farbartkoordinatenpunkt des Anzeigebilds, der innerhalb des bestimmten Farbartkoordinatenbereichs liegt, außerhalb einer designierten Fläche von Farbartkoordinaten liegt.

6. Head-up-Display-Vorrichtung nach einem der Ansprüche 1 bis 5,
   wobei beim Umwandeln des Anzeigeinhalts des Anzeigebilds die Umwandlungseinheit (102) dazu konfiguriert ist, eine Zielfläche, die einer Umwandlung des Anzeigeinhalts des Anzeigebilds innerhalb einer Anzeigefläche unterzogen wird, und eine Zeitplanung des Durchführens der Umwandlung des Anzeigeinhalts einzustellen oder selektiv zu ändern.

7. Mobiles Objekt (301), umfassend die Head-up-Display-Vorrichtung (200) nach einem der Ansprüche 1 bis 6 zum Anzeigen des Anzeigebilds auf einer Windschutzscheibe oder einem Kombinator, der an dem mobilen Objekt (301) befestigt ist.

8. Bildanzeigeverfahren, umfassend:

   Erkennen von zweidimensionalen Pixelverteilungsdaten bezüglich der Farbart und Helligkeit einer Nicht-Hintergrundregion außerhalb einer Region, auf die ein Anzeigebild, das durch eine Bildanzeigeeinrichtung (200) angezeigt wird, überlagert wird (S1); und
   Umwandeln eines Anzeigeinhalts des Anzeigebilds auf Grundlage erkannter Informationen durch:

   Bestimmen eines Farbartkoordinatenbereichs der Nicht-Hintergrundregion auf Grundlage der erkannten zweidimensionalen Verteilungsdaten (S2),
   Teilen des erkannten Bereichs der zweidimensionalen Verteilungsdaten in eine Mehrzahl von Flächen;
   Bestimmen der Farbartkoordinatenbereiche der Mehrzahl von Flächen;
   Auswählen eines Farbartkoordinatenbereichs, der zwischen der Mehrzahl von Flächen von unter den bestimmten Farbartkoordinatenbereichen gemeinsam ist; und
   Umwandeln einer ersten Farbart des Anzeigebilds in eine zweite Farbart außerhalb des bestimmten Farbartkoordinatenbereichs, wenn die erste Farbart des Anzeigebilds innerhalb des bestimmten Farbartkoordinatenbereichs liegt (S3, S4 und S5) und auf Grundlage des ausgewählten Farbartkoordinatenbereichs, der zwischen der Mehrzahl von Flächen normal ist.

9. Computerprogramm, umfassend computerlesbaren Code, der, wenn er durch ein Computersystem einer Vorrichtung nach Anspruch 1 ausgeführt wird, das Computersystem anweist, zum:

   Empfangen von einer Erkennungseinheit (101) von zweidimensionalen Pixelverteilungsdaten bezüglich der Farbart und Helligkeit einer Nicht-Hintergrundregion außerhalb einer Region, auf die ein Anzeigebild, das durch eine Bildanzeigeeinrichtung (200) angezeigt wird, überlagert wird (S1); und
   Umwandeln eines Anzeigeinhalts des Anzeigebilds auf Grundlage der erkannten Informationen durch:

   Bestimmen eines Farbartkoordinatenbereichs der Nicht-Hintergrundregion auf Grundlage der erkannten zweidimensionalen Verteilungsdaten (S2),
   Teilen des erkannten Bereichs der zweidimensionalen Verteilungsdaten in eine Mehrzahl von Flächen;
   Bestimmen der Farbartkoordinatenbereiche der Mehrzahl von Flächen;
   Auswählen eines Farbartkoordinatenbereichs, der zwischen der Mehrzahl von Flächen von unter den bestimmten Farbartkoordinatenbereichen gemeinsam ist; und

Umwandeln einer ersten Farbart des Anzeigebilds in eine zweite Farbart außerhalb des bestimmten Farbartkoordinatenbereichs, wenn die erste Farbart des Anzeigebilds innerhalb des bestimmten Farbartkoordinatenbereichs liegt (S3, S4 und S5) und auf Grundlage des ausgewählten Farbartkoordinatenbereichs, der zwischen der Mehrzahl von Flächen normal ist.

**Revendications**

1. Dispositif d'affichage tête haute (200) comprenant :

une unité d'affichage (230) configurée pour afficher une image d'affichage ;
une unité de détection (101) configurée pour détecter des données de distribution de pixels bidimensionnelle concernant la chromaticité et la luminosité d'une région sans arrière-plan à l'extérieur d'une région qui est superposée sur l'image d'affichage ; et
une unité de transformation (102) configurée pour :

déterminer une plage de coordonnées de chromaticité de la région sans arrière-plan sur la base des données de distribution bidimensionnelle détectée, et
transformer une première chromaticité de l'image d'affichage en une deuxième chromaticité en dehors de la plage de coordonnées de chromaticité déterminée lorsque la première chromaticité de l'image d'affichage est dans la plage de coordonnées de chromaticité déterminée ;
dans lequel l'unité de transformation (102) est configurée pour :

diviser la plage détectée des données de distribution bidimensionnelle en une pluralité de zones ;
déterminer des plages de coordonnées de chromaticité de la pluralité de zones ;
sélectionner une plage de coordonnées de chromaticité commune entre la pluralité de zones parmi les plages de coordonnées de chromaticité déterminées ; et
transformer la première chromaticité en la deuxième chromaticité sur la base de la plage de coordonnées de chromaticité sélectionnée commune entre la pluralité de zones.

2. Dispositif d'affichage tête haute (200) selon la revendication 1,
dans lequel l'unité de détection (101) est configurée pour détecter des données de distribution bidimensionnelle d'une région comprenant la région sans arrière-plan et une région d'arrière-plan qui est superposée sur l'image d'affichage.

3. Dispositif d'affichage tête haute (200) selon la revendication 2,
dans lequel la première chromaticité de l'image d'affichage avant transformation est une chromaticité de l'image d'affichage et de la lumière d'arrière-plan superposée sur l'image d'affichage.

4. Dispositif d'affichage tête haute (200) selon la revendication 3,
dans lequel la première chromaticité de l'image d'affichage est déterminée sur la base d'informations concernant la luminosité et la chromaticité de l'image d'affichage et de la lumière d'arrière-plan.

5. Dispositif d'affichage tête haute (200) selon la revendication 1,
dans lequel l'unité de transformation (102) est configurée pour transformer la première chromaticité de l'image d'affichage en la deuxième chromaticité en dehors de la plage de coordonnées de chromaticité déterminée lorsqu'un point de coordonnées de chromaticité de l'image d'affichage, qui se trouve dans la plage de coordonnées de chromaticité déterminée, sont à l'extérieur de toute zone désignée de coordonnées de chromaticité.

6. Dispositif d'affichage tête haute selon l'une quelconque des revendications 1 à 5, dans lequel lors de la transformation du contenu d'affichage de l'image d'affichage, l'unité de transformation (102) est configurée pour définir ou modifier sélectivement une zone cible soumise à la transformation du contenu d'affichage de l'image d'affichage dans une zone d'affichage et un moment d'exécution de la transformation du contenu d'affichage.

7. Objet mobile (301) comprenant le dispositif d'affichage tête haute (200) selon l'une quelconque des revendications 1 à 6, pour afficher l'image d'affichage sur un pare-brise ou un combineur monté sur l'objet mobile (301).

8. Procédé d'affichage d'image comprenant :

la détection de données de distribution de pixels bidimensionnelle concernant la chromaticité et la luminosité d'une région sans arrière-plan à l'extérieur d'une région sur laquelle une image d'affichage affichée par un appareil d'affichage d'image (200) est superposée (S1) ; et
la transformation d'un contenu d'affichage de l'image d'affichage sur la base des informations détectées par :

la détermination d'une plage de coordonnées de chromaticité de la région sans arrière-plan sur la base des données de distribution bidimensionnelle détectée (S2),
la division de la plage détectée des données de distribution bidimensionnelle en une pluralité de zones ;
la détermination de plages de coordonnées de chromaticité de la pluralité de zones ;
la sélection d'une plage de coordonnées de chromaticité commune entre la pluralité de zones parmi les plages de coordonnées de chromaticité déterminées ;
la transformation d'une première chromaticité de l'image d'affichage en une deuxième chromaticité en dehors de la plage de coordonnées de chromaticité déterminée lorsque la première chromaticité de l'image d'affichage se trouve dans la plage de coordonnées de chromaticité déterminée (S3, S4 et S5), et sur la base de la plage de coordonnées de chromaticité sélectionnée commune entre la pluralité de zones.

9. Programme informatique comprenant un code lisible par ordinateur qui, lorsqu'il est exécuté par un système informatique d'un dispositif selon la revendication 1, ordonne au système informatique de :

recevoir, à partir d'une unité de détection (101), des données de distribution de pixels bidimensionnelle concernant la chromaticité et la luminosité d'une région sans arrière-plan à l'extérieur d'une région sur laquelle une image d'affichage affichée par un appareil d'affichage d'image (200) est superposée (S1), et
transformer un contenu d'affichage de l'image d'affichage sur la base des informations détectées par :

la détermination d'une plage de coordonnées de chromaticité de la région sans arrière-plan sur la base des données de distribution bidimensionnelle détectée (S2),
la division de la plage détectée des données de distribution bidimensionnelle en une pluralité de zones ;
la détermination de plages de coordonnées de chromaticité de la pluralité de zones ;
la sélection d'une plage de coordonnées de chromaticité commune entre la pluralité de zones parmi les plages de coordonnées de chromaticité déterminées ; et
la transformation d'une première chromaticité de l'image d'affichage en une deuxième chromaticité à l'extérieur de la plage de coordonnées de chromaticité déterminée lorsque la première chromaticité de l'image d'affichage est à l'intérieur de la plage de coordonnées de chromaticité déterminée (S3, S4 et S5), et sur la base de la plage de coordonnées de chromaticité sélectionnée commune entre la pluralité de zones.

EP 3 543 769 B1

# FIG. 1

# FIG. 2

# FIG. 3

EP 3 543 769 B1

HUD 200

# FIG. 4

250

230

251

257

201R,201G,201B

255

| FPGA | → | LD DRIVER | → | LD |
|------|---|-----------|---|-----|

258

| I/F | | MEMS CONTROLLER | → | MEMS |
|-----|---|-----------------|---|------|

256

208a

| CPU | ROM | RAM |
|-----|-----|-----|

252

253

254

# FIG. 5

# FIG. 6

: BACKGROUND REGION WHEN OBTAINING COLOR-INFORMATION

: TWO-DIMENSIONAL DISTRIBUTION OBTAINING AREA WHEN OBTAINING COLOR-INFORMATION

: BACKGROUND REGION WHEN CONVERTING DISPLAY COLOR

TWO-DIMENSIONAL DISTRIBUTION OBTAINING AREA WHEN OBTAINING COLOR-INFORMATION

BACKGROUND REGION WHEN CONVERTING DISPLAY COLOR

BACKGROUND REGION WHEN OBTAINING COLOR-INFORMATION

POSITION OF VEHICLE AFTER PROCESSING TIME

POSITION OF VEHICLE WHEN OBTAINING COLOR INFORMATION

TRAVELING DIRECTION

EP 3 543 769 B1

# FIG. 7

250

101

DETECTION UNIT

102

TRANSFORMATION UNIT

# FIG. 8

START

OBTAIN TWO-DIMENSIONAL DISTRIBUTION DATA OF NON-BACKGROUND REGION — S1

DETERMINE CHROMATICITY COORDINATES RANGE OF BACKGROUND LIGHT — S2

CHROMATICITY COORDINATES OF DISPLAY IMAGE ARE INCLUDED IN THE CHROMATICITY COORDINATES RANGE OF BACKGROUND LIGHT? S3

No

Yes

PERFORM COLOR TRANSFORMATION PROCESS — S4

DISPLAY AN IMAGE — S5

END

# FIG. 9

(1)DISPLAY AREA OF HUD

(2)COLOR-INFORMATION OBTAINING AREA

(1)(2)SUPERIMPOSED AREA

# FIG. 10

(1) DISPLAY AREA OF HUD

(2) COLOR-INFORMATION OBTAINING AREA

(3) IMAGING RANGE OF CAMERA

FIG. 11A

: DISPLAY AREA OF HUD

: COLOR-INFORMATION
OBTAINING AREA

: TWO-DIMENSIONAL DISTRIBUTION
OBTAINING AREA

FIG. 11B

: DISPLAY AREA OF HUD

: COLOR-INFORMATION
OBTAINING AREA

: TWO-DIMENSIONAL DISTRIBUTION
OBTAINING AREA

EP 3 543 769 B1

## FIG. 12A

TRAVELING DIRECTION:

(1) DISPLAY AREA OF HUD

(2) COLOR-INFORMATION OBTAINING AREA

(1)(2) SUPERIMPOSED AREA

IMAGING RANGE OF CAMERA

## FIG. 12B

TRAVELING DIRECTION:

(1) DISPLAY AREA OF HUD

(2) COLOR-INFORMATION OBTAINING AREA

(1)(2) SUPERIMPOSED AREA

IMAGING RANGE OF CAMERA

EP 3 543 769 B1

FIG. 13A

FIG. 13B

:CHROMATICITY AREA

:OBTAINED CHROMATICITY COORDINATE POINT

○ :DISPLAY-COLOR CHROMATICITY COORDINATES C BEFORE TRANSFORMATION

◇ :DISPLAY-COLOR CHROMATICITY COORDINATES C* AFTER TRANSFORMATION

EP 3 543 769 B1

# FIG. 14A

- ▨ : AREA A1
- ▨ : AREA A1
- ▤ : AREA A3
- ▨ : AREA A4

# FIG. 14B

| FIRST OBTAINED FRAME OF TWO-DIMENSIONAL DISTRIBUTION DATA | SECOND OBTAINED FRAME OF TWO-DIMENSIONAL DISTRIBUTION DATA | M-th OBTAINED FRAME OF TWO-DIMENSIONAL DISTRIBUTION DATA |
|---|---|---|

| OBTAINMENT OF TWO-DIMENSIONAL DISTRIBUTION DATA | TRANS-MISSION | OBTAINMENT OF TWO-DIMENSIONAL DISTRIBUTION DATA | TRANS-MIS-SION | OBTAINMENT OF TWO-DIMENSIONAL DISTRIBUTION DATA |
|---|---|---|---|---|

| COLOR-INFOR-MATION GENER-ATION | | | COLOR-INFOR-MATION GENER-ATION | | TRANS-MIS-SION |
|---|---|---|---|---|---|

| TRANS-MISSION | COR-RECTION USING AREA A1 | COR-RECTION USING AREA A2 | COR-RECTION USING AREA A(N-1) | COR-RECTION USING AREA A(N) | COR-RECTION USING AREA A1 |
|---|---|---|---|---|---|

COLOR-TRANSFORMED FRAME F1

←→

PERFORM COLOR CORRECTION N TIMES DURING ONE-TIME OBTAINMENT OF TWO-DIMENSIONAL DISTRIBUTION DATA

←——————————————→

EP 3 543 769 B1

# FIG. 14C

▦ : AREA A1      ▤ : AREA A2

▥ : AREA A3      ▦ : AREA A4

▦ : AREA A5      ▨ : AREA A6

▧ : AREA A7      ▦ : AREA A8

# FIG. 14D

□ : CHROMATICITY COORDINATES RANGE OF EACH AREA

▨ : CHROMATICITY COORDINATES RANGE COMMON BETWEEN ALL THE AREAS

# FIG. 15A

[::]:CHROMATICITY COORDINATES
RANGE OF BACKGROUND

✕ :REFERENCE COORDINATE POINT

○ :CHROMATICITY COORDINATES
C BEFORE TRANSFORMATION

↖ :TRANSFORMATION DIRECTION

# FIG. 15B

[::]:CHROMATICITY COORDINATES
RANGE OF BACKGROUND

(˙) :CIRCUMCIRCLE OF
CHROMATICITY COORDINATES
RANGE OF BACKGROUND

↖ :CIRCUMRADIUS AND AMOUNT
OF MOVEMENT DUE TO COLOR
TRANSFORMATION

↖ :TRANSFORMATION DIRECTION

# FIG. 15C

[::]:CHROMATICITY COORDINATES
RANGE OF BACKGROUND

○ :CHROMATICITY COORDINATES
C BEFORE TRANSFORMATION

↖ :THRESHOLD DISTANCE
TO CHROMATICITY
COORDINATES OF BACKGROUND

# FIG. 15D

[::]:CHROMATIC COORDINATES
RANGE OF BACKGROUND
AFTER EXPANSION

FIG. 16A

FIG. 16B

::::: :CHROMATICITY COORDINATES
       RANGE OF BACKGROUND

◆ :BARYCENTRIC COORDINATES OF CHROMATICITY
    COORDINATES RANGE OF BACKGROUND

◯ :CHROMATICITY COORDINATES C OF DISPLAY
    COLOR BEFORE TRANSFORMATION

△ :ESTIMATED CHROMATICITY COORDINATES C´
    VISUALLY RECOGNIZED BY DRIVER

◆ :BARYCENTRIC COORDINATES OF CHROMATICITY
    COORDINATES RANGE OF BACKGROUND

◯ :CHROMATICITY COORDINATES C OF DISPLAY
    COLOR BEFORE TRANSFORMATION

△ :ESTIMATED CHROMATICITY COORDINATES C´
    VISUALLY RECOGNIZED BY DRIVER

▨ :ANY HUE AREA

▲ :CHROMATICITY COORDINATES OF WHITE COLOR w

◇ :CHROMATICITY COORDINATES C✳ OF DISPLAY
    COLOR AFTER TRANSFORMATION

# FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H061994211070 B
- WO 2017138321 A1
- EP 3206075 A1